# EUROPEAN PATENT SPECIFICATION

(11) **EP 0 378 302 B1**
(45) Date of publication and mention of the grant of the patent: **24.03.1993**
(21) Application number: 90300079.2
(22) Date of filing: 04.01.1990
(51) Int. Cl.: B64C 27/04

(54) **Helicopters**
Hubschrauber
Hélicoptère

(30) Priority: 09.01.1989 GB 8900371
(43) Date of publication of application: 18.07.1990
(73) Proprietor: WESTLAND HELICOPTERS LIMITED, Yeovil Somerset BA20 2YB (GB)
(72) Inventor: Balmford, David Ernest Hall, Sherborne Dorset (GB)
(74) Representative: Jack, Bruce James

(56) References cited:
- CH-A- 666 664
- DE-A- 3 011 155
- DE-A- 3 636 454
- GB-A- 2 130 984
- US-A- 4 660 785

## Description

This invention relates to helicopters and is particularly concerned with compound helicopters.

A compound helicopter usually has fixed wings to provide lift during forward flight and usually, auxiliary propulsion means to provide additional thrust required for high speed forward flight.

It has been proposed in GB-A-1095573 to provide a compound helicopter having a rearward facing propeller at the end of a tail boom. The propeller is mounted in a duct and a plurality of vertical vanes in the propeller slipstream provide control surfaces to control forward flight direction and provide anti-torque control when hovering. There is no disclosure of any means or the desirability of varying the ratio of power applied during operation as between the main sustaining rotor and the propeller and it is likely therefore that the forward speed of the disclosed compound helicopter would be limited by the high tip mach number encountered by the advancing blades of the main sustaining rotor as forward speed increases.

DE-A-3 636 454 discloses a helicopter having a tail boom-mounted propeller that provides anti-torque control and thrust for forward motion of the helicopter. The helicopter rotor and the propeller are both driven by an engine but, as in the case of GB-A-1 095 573 discussed above, there is no disclosure of any means to vary the ratio of power applied during operation as between the rotor and the propeller, nor is there disclosure of any means (such as a fixed wing) to off load the rotor during high speed flight and thereby enable the rotor to be slowed to avoid the speed limiting effect of high tip mach number. Thus in high speed flight, although much of the engine power output is absorbed by the propeller, the rotor cannot be slowed and will continue to consume a significant proportion of the engine output power in providing necessary lift

GB-A-2130984 describes a compound helicopter having a gas turbine power plant provided with a variable area final propulsion nozzle which receives the exhaust from a power turbine. In such an arrangement the power supplied to a main sustaining rotor can be reduced during high speed flight, and auxiliary propulsion means in the form of a jet thrust from the nozzle in forward flight is obtained. The jet nozzle may not be fuel efficient when operated in a continuous propulsion mode and, although the rotor may be slowed, rotor aerodynamic boundaries may again be reached as forward speed increases. Furthermore, the helicopter will require additional means such as a tail rotor to provide anti-torque forces. A tail rotor is operationally redundant in such an application during high speed flight and is detrimental to performance due to its high drag load and the fact that it consumes power.

Accordingly, this invention provides a compound helicopter having a fuselage, a main sustaining rotor located above the fuselage for rotation about a generally vertical axis, anti-torque means for providing an anti-torque force during hover and low speed flight, a propeller for providing propulsion during high speed flight, at least one gas turbine engine providing a shaft power output for driving the main sustaining rotor, the anti-torque means and the propeller, and control means for controlling the shaft power output so as to provide a shaft power output appropriate to drive the sustaining rotor and the anti-torque means in hover and low speed flight and with the sustaining rotor substantially unpowered a reduced shaft power output to the propeller appropriate to drive the propeller in high speed flight whereby efficient utilisation of available power is obtained during both the hover and high speed flight modes of operation.

Preferably, the control means comprise a variable area exhaust nozzle for receiving the exhaust from the power turbine of the engine whereby with the nozzle in a maximum area position the engine provides the shaft power output appropriate for hover and low speed operation and with the nozzle in a reduced area position the engine provides the reduced shaft power output appropriate for high speed operation and a propulsive thrust from the nozzle.

Alternatively, the control means comprise variable geometry inlet guide vanes associated with the gas turbine engine whereby the engine shaft power output is changed by control of the engine inlet air.

The propeller is preferably a rearwardly facing variable pitch propeller and is preferably mounted for rotation concentrically in a duct about a generally horizontal axis. The propeller may be located at the end of a tail boom extended rearwardly from the fuselage and the anti-torque means conveniently comprises a plurality of vertical vanes pivotally mounted in the propeller slipstream. Additionally, a plurality of horizontal vanes may be pivotally mounted in the propeller slipstream.

A fixed wing may extend from both sides of the fuselage and the wing may comprise an augmentor blown wing.

The invention also provides a compound helicopter comprising a fuselage with a rearwardly extending tail boom, a fixed wing extending from both sides of the fuselage, a main sustaining rotor located above the fuselage for rotation about a generally vertical axis, a rearwardly facing variable pitch propeller located in a duct at the end of the tail boom for rotation about a generally horizontal axis, a plurality of pivotally mounted vertical vanes downstream of the propeller and at least one gas turbine engine providing shaft power output for driving the main sustaining rotor and the propeller through a gearbox, wherein the exhaust from the power turbine is ducted to atmosphere through a variable area nozzle whereby with the nozzle in a maximum area position the engine provides a shaft power output appropriate to drive the main sustaining rotor to provide lift and the propeller to provide an anti-torque force in hover and low speed flight and with the nozzle in a reduced area position and the main sustaining rotor unloaded a propulsive thrust is obtained from the nozzle and the engine provides a reduced shaft power output to the propeller appropriate for efficient operation of the propeller in high speed flight.

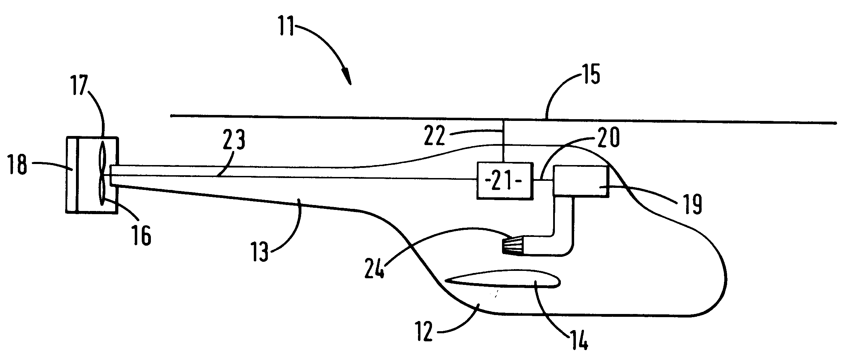

The invention will now be described by way of example only and with reference to the accompanying drawing which comprises a generally schematic side view of a compound helicopter constructed according to one embodiment of the invention.

A compound helicopter 11 comprises a fuselage 12 having a rearwardly extending tail boom 13. A fixed wing 14 extends from both sides of the fuselage 12 and a main sustaining rotor 15 is located above the fuselage 12 for rotation about a generally vertical axis.

A rearwardly facing variable pitch propeller 16 is located at the end of tail boom 13 for rotation about a generally horizontal axis. The propeller 16 is located concentrically in a duct 17 which supports at its outlet a plurality of pivotally mounted vertical vanes 18.

At least one gas turbine engine 19 is supported on the fuselage 12 with its power turbine connected through a drive shaft 20 to a gearbox 21. A vertical drive shaft 22 connects the gearbox 21 to drive the main sustaining rotor and a horizontal drive shaft 23 connects the gearbox 21 to drive the propeller 16.

Whilst propeller 16 is an efficient means of producing a propulsive thrust its size in such an arrangement is necessarily a compromise to satisfy stringent space, weight and centre of gravity considerations whilst providing a useful thrust. This is likely to result in a propeller 16 of a size which cannot absorb efficiently as much shaft power as that required to drive the main sustaining rotor and anti-torque means in hover and low speed flight.

The exhaust from the power turbine of engine 19 is ducted to atmosphere through control means comprising a rearwardly facing variable area nozzle 24 for control of the split of a substantially constant total engine power output comprised of a shaft power output and a jet thrust.

Thus, in operation, engine 19 is operated at a substantially constant speed and its output is utilised in a controllable variable split between shaft power to the gearbox 21 and jet thrust from the variable area nozzle 24. In hover and low speed flight the engine 19 is run at maximum power with the variable area nozzle 24 in its maximum area position to produce maximum shaft power to drive the main sustaining rotor 15 and the propeller 16 through gearbox 21, and little or no jet thrust is obtained from the nozzle 24. In this mode of operation the anti-torque force necessary to counteract main rotor torque and provide directional control is provided by the pivotally mounted vertical vanes 18 in the propeller slipstream.

As forward speed increases more of the required lift force is provided by the fixed wing 14, and the main rotor 15 is gradually trimmed until it is operating in or very near an autorotation state in which it absorbs little or no shaft power from engine 19. Consequently virtually all of the available shaft power from the engine is diverted to drive the propeller 16. However it is inefficient to provide more shaft power to the propeller 16 than can be absorbed efficiently and the present invention provides for the maximum efficient utilisation of available engine power during high speed flight.

This is achieved by reducing the area of the variable area nozzle 24 to reduce the shaft power output of the power turbine of engine 19 to a level that can be used efficiently by the propeller 16. In other words, since no shaft power is being absorbed by the main rotor 15, the area of nozzle 24 is reduced until the shaft power output from the engine is substantially equal to that required by the propeller 16 for maximum efficiency.

By "substantially equal" in this context we mean that the shaft power output from the engine 19 during high speed forward flight is matched as closely as is possible within the constraints of the design characteristics of the engine and the overall operational requirements of the helicopter with the maximum shaft power that can be absorbed efficiently by the propeller 16.

The described reduction in shaft power output by reducing the area of the variable area nozzle 24 results in the remaining engine capacity issuing as an increasing jet thrust from the nozzle 24 to provide a useful additional forward thrust so that the whole of the available power output from the engine 19 is utilised efficiently in increasing the forward thrust on the helicopter.

The off-loading of the main sustaining rotor 15 pushes out the aerodynamic boundaries so that the restrictions to forward speed are encountered at a higher forward speed than is the case for compound helicopters in which the main rotor is continuously powered. The elimination of the conventional anti-torque rotor enhances performance and the use of a propeller for forward propulsion represents the most efficient manner of utilising engine shaft power in high speed forward flight. Operational efficiency in that mode is further enhanced due to the fact that the shaft power output from the engine is matched to that required for maximum propeller performance with the remainder of the engine capacity utilised as a jet thrust to enhance high speed performance.

It will be understood that the vertical vanes 18 provide the necessary heading control in high speed forward flight.

The duct 17 increases the aerodynamic performance of the propeller 16 and improves the safety of the helicopter when compared to the use of conventional unprotected anti-torque rotors.

Another safety feature concerns the ability to land the helicopter in the event of a failure of the propeller 16 by reducing the shaft power required by the main sustaining rotor 15 so that there is no anti-torque force requiring to be compensated. As previously described this is accomplished by trimming the main rotor and, by simultaneously reducing the area of the variable area nozzle 24 to maximise the thrust from the nozzle, the helicopter is able to make a STOL landing in the manner of a conventional autogyro. This feature is enhanced by the aerodynamic cross sectional shape of the duct 17 which provides a control function, and some control would continue to be provided by the vanes 18.

Whilst one embodiment has been described and illustrated it will be understood that many modifications may be made without departing from the scope of the invention as defined in the appended claims. For example alternative anti-torque means may be provided and may comprise cyclic pitch control means for the propeller 16 in place of the vertical vanes. One or more horizontal vanes may be provided in the slipstream of the propeller to provide pitch control of the helicopter to trim rotor flapping thereby reducing the cyclic control required at the main rotor and minimising fatigue loads in the main sustaining rotor. Alternative control means such as the use of variable geometry inlet guide vanes to control the shaft power output of the gas turbine may be provided although it will be appreciated that such an embodiment will not have the advantage of the additional jet thrust of the illustrated embodiment in the high speed flight mode. A variable diameter main sustaining rotor may be used to further enhance operational characteristics in both modes of operation. In a preferred embodiment two or more gas turbine engines 19 would be provided each being connected by a drive shaft to the gearbox 21 and each having its turbine exhaust ducted to atmosphere through a variable area nozzle 24. The or each variable area nozzle 24 may be vectorable for example downwardly to provide an additional lift force or laterally to assist attitude control. Augmentor wing flaps may be provided on the wings and may be powered by air from the gas turbine engine to provide additional lift and thrust from the wing. Alternatively, if the intended role of a compound helicopter is such as to require mainly thrust compounding, it may be possible to dispense with the lift compounding means comprising the fixed wing of the described and illustrated embodiment of this invention.

## Claims

1. A compound helicopter (11) having a fuselage (12), a main sustaining rotor (15) located above the fuselage (12) for rotation about a generally vertical axis, anti-torque means (16-18) for providing an anti-torque force during hover and low speed flight, a propeller (16) for providing propulsion during high speed flight, and at least one gas turbine engine (19) providing a shaft power output for driving the sustaining rotor (15), the anti-torque means (16-18) and the propeller (16), characterised by control means (24) for controlling the shaft power output so as to provide a shaft power output appropriate to drive the sustaining rotor (15) and the anti-torque means (16-18) in hover and low speed flight and with the sustaining rotor (15) substantially unpowered a reduced shaft power output to the propeller (16) appropriate to drive the propeller (16) in high speed flight whereby efficient utilisation of available power is obtained during both the hover and high speed flight modes of operation.

2. A helicopter as claimed in Claim 1, further characterised in that the control means (24) comprise a variable area exhaust nozzle (26) for receiving the exhaust from the power turbine of the engine (19) whereby with the nozzle (24) in a maximum area position the engine (19) provides the shaft power output appropriate for hover and low speed operation and with the nozzle (24) in a reduced area position the engine (19) provides the reduced shaft power output appropriate for high speed operation and a propulsive thrust from the nozzle (24).

3. A helicopter as claimed in Claim 1, further characterised in that said control means comprise variable geometry inlet guide vanes associated with the gas turbine engine (19) whereby the shaft power output is changed by control of the engine inlet air.

4. A helicopter as claimed in any preceding Claim, further characterised in that said propeller (16) is a rearwardly facing variable pitch propeller mounted for rotation concentrically in a duct (17) about a generally horizontal axis.

5. A helicopter as claimed in Claim 4, further characterised in that said propeller (16) is located at the end of a tail boom (13) extended rearwardly from the fuselage (12).

6. A helicopter as claimed in Claim 4 or Claim 5, further characterised in that said anti-torque means (16-18) comprise a plurality of vertical vanes (18) pivotally mounted in the propeller slipstream.

7. A helicopter as claimed in any one of Claims 4 to 6, further characterised in that a plurality of horizontal vanes are pivotally mounted in the propeller slipstream.

8. A helicopter as claimed in any preceding Claim, further characterised in that a fixed wing (14) extends from both sides of the fuselage (12).

9. A helicopter as claimed in Claim 8, further characterised in that said wing (14) comprises an augmentor blown wing.

10. A compound helicopter (11) comprising a fuselage (12) with a rearwardly extending tail boom (13), a fixed wing (14) extending from both sides of the fuselage (12), a main sustaining rotor (15) located above the fuselage (12) for rotation about a generally vertical axis, a rearwardly facing variable pitch propeller (16) located in a duct (17) at the end of the tail boom (13) for rotation about a generally horizontal axis, a plurality of pivotally mounted vertical vanes (18) downstream of the propeller (16) and at least one gas turbine engine (19) providing shaft power output for driving the main sustaining rotor (15) and the propeller (16) through a gearbox (21), characterised in that the exhaust from the power turbine of the engine (19) is ducted to atmosphere through a variable area nozzle (24) whereby with the nozzle (24) in a maximum area position the engine (19) provides shaft power output appropriate to drive the main sustaining rotor (15) to provide lift and the propeller (16) to provide an anti-torque force in hover and low speed flight and with the nozzle (24) in a reduced area position and the main sustaining rotor (15) unloaded a propulsive thrust is obtained from the nozzle (24) and the engine (19) provides a reduced shaft power output to the propeller (16) appropriate for efficient operation of the propeller (16) in high speed flight.

## Patentansprüche

1. Verbundhubschrauber (11) mit einem Rumpf (12), einem oberhalb des Rumpfs (12) zur Drehung um eine im allgemeinen vertikale Achse angeordneten Haupttragrotor (15), einem Gegendrehmoment-Mittel (16 bis 18) zum Liefern einer gegendrehenden Kraft während des Schwebeflugs und Flugs bei niedriger Geschwindigkeit, einem Propeller (16) zum Liefern des Vortriebs beim Hochgeschwindigkeitsflug, und wenigstens einem Gasturbinenmotor (19) zur Lieferung einer Ausgangswellenleistung zum Antrieb des Haupttragrotors (15), des Gegendrehmoment-Mittels (16 bis 18) und des Propellers (16), gekennzeichnet durch Regelmittel (24) zur Regelung der Ausgangswellenleistung, um eine Ausgangswellenleistung zu liefern, die geeignet ist, den Tragrotor (15) und das Gegendrehmoment-Mittel (16 bis 18) beim Schwebeflug und Flug niedriger Geschwindigkeit anzutreiben, und bei im wesentlichen leerlaufendem Tragrotor (15) eine verringerte Ausgangswellenleistung an den Propeller (16) zu liefern, die geeignet ist, den Propeller (16) bei Hochgeschwindigkeitsflug anzutreiben, wodurch sowohl während des Schwebeflug- als auch während des Hochgeschwindigkeitsflugzustandes eine effiziente Nutzung der verfügbaren Leistung erzielt wird.

2. Hubschrauber nach Anspruch 1, dadurch gekennzeichnet, daß das Regelmittel (24) eine Abgasdüse (26) veränderbarer Fläche zur Aufnahme des Abgases von der Leistungsturbine des Motors (19) umfaßt, wodurch, wenn die Düse (24) auf größte Fläche eingestellt ist, der Motor (19) die für Schwebeflug und Flug niedriger Geschwindigkeit geeignete Ausgangswellenleistung liefert, und wenn die Düse (24) auf verringerte Fläche eingestellt ist, der Motor (19) die für Hochgeschwindigkeitsflug geeignete, verringerte Ausgangswellenleistung und einen Vortriebsschub von der Düse (24) liefert.

3. Hubschrauber nach Anspruch 1, dadurch gekennzeichnet, daß besagtes Regelmittel zum Gasturbinenmotor (19) gehörende Einlaßleitklappen veränderbarer Geometrie umfaßt, wodurch die Ausgangswellenleistung über die Regelung der Einlaßluft zum Motor geändert wird.

4. Hubschrauber nach einem der vorangehenden Ansprüche, dadurch gekennzeichnet, daß besagter Propeller (16) ein nach hinten gerichteter Propeller mit variablem Blatteinstellwinkel ist, der konzentrisch in einem Rohr (17) zur Drehung um eine im allgemeinen horizontale Achse angeordnet ist.

5. Hubschrauber nach Anspruch 4, dadurch gekennzeichnet, daß besagter Propeller (16) am Ende eines sich vom Rumpf (12) nach hinten erstreckenden Heckauslegers (13) angeordnet ist.

6. Hubschrauber nach Anspruch 4 oder 5, dadurch gekennzeichnet, daß besagtes Gegendrehmoment-Mittel (16 bis 18) eine Mehrzahl vertikaler, schwenkbar im Propellerstrahl gehaltener Steuerflächen (18) umfaßt.

7. Hubschrauber nach einem der Ansprüche 4 bis 6, dadurch gekennzeichnet, daß eine Mehrzahl horizontaler Steuerflächen schwenkbar im Propellerstrahl gehalten sind.

8. Hubschrauber nach einem der vorangehenen Ansprüche, dadurch gekennzeichnet, daß sich eine starre Tragfläche (14) von beiden Seiten des Rumpfes (12) erstreckt.

9. Hubschrauber nach Anspruch 8, dadurch gekennzeichnet, daß besagte Tragfläche (14) eine von einem Auftriebsverstärker angeblasene Tragfläche umfaßt.

10. Verbundhubschrauber (11) mit einem Rumpf (12) mit einem sich nach hinten erstreckenden Heckausleger (13), einer starren, sich von beiden Seiten des Rumpfs (12) erstreckenden Tragfläche (14), einem oberhalb des Rumpfs (12) zur Drehung um eine im allgemeinen vertikale Achse angeordneten Haupttragrotor (15), einem nach hinten gerichteten Propeller (16) mit variablem Blatteinstellwinkel, der in einem Rohr (17) am Ende des Heckauslegers (13) zur Drehung um eine im allgemeinen horizontale Achse angeordnet ist, einer Mehrzahl schwenkbar gehaltener, vertikaler Steuerflächen (18) stromab vom Propeller (16) und wenigstens einem Gasturbinenmotor (19) zur Lieferung der Ausgangswellenleistung zum Antrieb des Haupttragrotors (15) und des Propellers (16) über ein Getriebe (21), dadurch gekennzeichnet, daß das Abgas der Antriebsturbine des Motors (19) durch eine Düse (24) veränderbarer Fläche an die Atmosphäre geführt wird, wodurch, wenn die Düse (24) auf die größte Fläche eingestellt ist, der Motor (19) eine Ausgangswellenleistung liefert, die geeignet ist, den Haupttragrotor (15) so anzutreiben, daß er Auftrieb liefert, und den Propeller (16), daß er beim Schwebeflug und Flug niedriger Geschwindigkeit eine gegendrehende Kraft liefert, und wenn die Düse (24) auf verringerte Fläche eingestellt ist und der Haupttragrotor (15) leerläuft, ein Vortriebsschub von der Düse (24) erhalten wird und der Motor (19) eine verringerte Ausgangswellenleistung an den Propeller (16) liefert, die für eine effiziente Arbeitsweise des Propellers (16) im Hochgeschwindigkeitsflug geeignet ist.

## Revendications

1. Hélicoptère combiné (11) ayant un fuselage (12), un rotor de sustentation principal (15) situé au-dessus du fuselage (12) et tournant autour d'un axe généralement vertical (22), un moyen anti-couple (16,18) fournissant une force anti-couple pendant le vol stationaire et le vol à faible vitesse, une hélice (16) pour assurer la propulsion pendant le vol à grande vitesse, et au moins un moteur à turbine à gaz (19) fournissant de la puissance à un arbre pour entraîner le rotor de sustentation (15), le moyen anti-couple (16,18) et l'hélice (16), caractérisé par un moyen de commande (24) pour commander la puissance fournie à l'arbre de façon à fournir une puissance à l'arbre convenant pour entraîner le rotor de sustentation (15) et le moyen anti-couple (16,18) pendant le vol stationnaire et vol à faible vitesse et,lorsque le rotor de sustentation (15) ne reçoit sensiblement pas de puissance, une puissance à l'arbre réduite fournie à l'hélice (16) et suffisante pour entraîner l'hélice (16) pendant le vol à grande vitesse, ceci permettant d'utiliser efficacement la puissance disponible pendant les modes de fonctionnement en vol stationnaire et le vol à grande vitesse.

2. Hélicoptère selon la revendication 1, caractérisé en outre par le fait que le moyen de commande (24) comprend une tuyère d'échappement à section variable (26) destinée à recevoir l'échappement provenant de la turbine de puissance du moteur (19), moyennant quoi, si la tuyère (24) est en position à section maximale,le moteur (19) fournit la puissance à l'arbre convenant pour le vol stationnaire et le vol à. faible vitesse et,si la tuyère (24) est en position à section réduite, le moteur (19) fournit une puissance à l'arbre réduite convenant pour le fonctionnement à grande vitesse ainsi qu'une poussée de propulsion provenant de la tuyère (24).

3. Hélicoptère selon la revendication 1, caractérisé en outre en ce que ledit moyen de commande comprend des aubages de guidage d'entrée à géométrie variable associés au moteur à turbine à gaz (19), tandis que la puissance fournie à l'arbre est modifiée en commandant l'air d'entrée du moteur.

4. Hélicoptère selon l'une quelconque des revendications précédentes, caractérisé en outre en ce que ladite hélice (16) est une hélice à pas variable tournée vers l'arrière et montée de manière à tourner concentriquement dans une gaine (17) autour d'un axe généralement horizontal.

5. Hélicoptère selon la revendication 4, caractérisé en outre en ce que ladite hélice (16) est située à l'extrémité d'une poutre de queue (13) s'étendant vers l'arrière depuis le fuselage (12).

6. Hélicoptère selon la revendication 4 ou la revendication 5, caractérisé en outre en ce que ledit moyen anti-couple (16, 18) comprend plusieurs aubages verticaux (18) montés à pivot dans le souffle de l'hélice.

7. Hélicoptère selon l'une quelconque des revendications 4 à 6, caractérisé en outre en ce que plusieurs aubages horizontaux sont montés à pivot dans le souffle de l'hélice.

8. Hélicoptère selon l'une quelconque des revendications précédentes, caractérisé en outre en ce qu'une aile fixe (14) s'étend de part et d'autre du fuselage (12).

9. Hélicoptère selon la revendication 8, caractérisé en outre en ce que ladite aile (14) comprend une aile à sustentation augmentée.

10. Hélicoptère combiné (11) comprenant un fuselage (12) avec une poutre de queue (13) s'étendant vers l'arrière, une aile fixe (14) s'étendant de part et d'autre du fuselage (12), un rotor de sustentation principal (15) situé au-dessus du fuselage (12) et tournant autour d'un axe généralement vertical, une hélice à pas variable (16) tournée vers l'arrière située dans une gaine (17) à l'extrémité de la poutre de queue (13) et tournant autour d'un arbre généralement horizontal, plusieurs aubages verticaux (18) montés à pivot en aval de l'hélice (16) et au moins un moteur à turbine à gaz (19) fournissant une puissance à l'arbre pour entraîner le rotor de sustentation principal (15) et l'hélice (16) par l'intermédiaire d'une transmission (21), caractérisé en ce que l'échappement de la turbine de puissance du moteur (19) est envoyé dans l'atmosphère par une tuyère à section variable (24) de sorte que, si la tuyère (24) est en position à section maximale, le moteur (19) fournit une puissance à l'arbre convenant pour entraîner le rotor de sustentation principal (19) pour assurer la sustentation et l'hélice (16) pour assurer une force anti-couple pendant le vol stationnaire et le vol à faible vitesse et que si la tuyère (24) est en position à section réduite et que le rotor de sustentation principal (15) est déchargé, une poussée de propulsion est fournie par la tuyère (24) et le moteur (19) fournit une puissance à l'arbre réduite à l'hélice (16) qui convient pour le fonctionnement efficace de l'hélice (16) pendant le vol à grande vitesse.
